# EUROPÄISCHE PATENTSCHRIFT

(11) **EP 1 046 620 B1**
(45) Veröffentlichungstag und Bekanntmachung des Hinweises auf die Patenterteilung: **12.01.2005**
(21) Anmeldenummer: 00108461.5
(22) Anmeldetag: 18.04.2000
(51) Int. Cl.: C03C 27/04, C03C 27/06

(54) **Verfahren zum Verschweissen von Oberflächen von Materialien**
Method for welding material surfaces
Méthode de soudage de surfaces de matériaux

(30) Priorität: 23.04.1999 DE 19918672
(43) Veröffentlichungstag der Anmeldung: 25.10.2000
(73) Patentinhaber: Institut für Angewandte Photovoltaik, 45886 Gelsenkirchen (DE)
(72) Erfinder: Klockhaus, Matthias, 45309 Essen (DE); Jestel, Dieter, Dr., 44579 Castrop-Rauxel (DE)
(74) Vertreter: Tönhardt, Marion, Dr.

(56) Entgegenhaltungen:
- EP-A- 0 678 486
- WO-A-93/12049
- WO-A-98/39365
- CH-A- 529 700
- US-A- 3 755 065
- US-A- 3 798 114
- US-A- 5 489 321
- US-A- 5 682 453

## Beschreibung

Die Erfindung betrifft ein Verfahren zum Verschweißen von Oberflächen von Materialien, von denen mindestens eines ein Glas ist, bei dem die zum Verschweißen erforderliche Energie über einen Laserstrahl eingebracht wird.

. Bedingt durch dessen besondere Eigenschaften war es bisher erforderlich, daß Glas, das mit einem anderen Glas oder einem Metall durch einen Schmelzfluß miteinander verbunden werden sollte, über den Transformationspunkt des Glases/der Gläser erhitzt werden mußte. Teilweise war es auch erforderlich, die zu verschmelzenden Stellen beispielsweise durch Flammen zusätzlich zu erhitzen. Im Anschluß an den Verschweißvorgang muß das Glas dann langsam wieder unter Vermeidung von Spannungen, die zu Bruch führen können, auf Raumtemperatur abgekühlt werden.

Ein Verfahren der eingangs genannten Gattung ist aus der US 5 489 321 bekannt. Hier wird ein lichtabsorbierendes Material, beispielsweise ein Metall oder ein geeignetes Oxid, zwischen die Glasscheiben an die Stellen gebracht, wo das Glas verschweißt werden soll. Als besonders bevorzugte lichtabsorbierende Materialien haben sich Eisenoxid, Vanadiumoxid oder Nickeloxid erwiesen, da die Metallionen ihr Lichtabsorptionsmaximum etwa bei der Emissionswellenlänge des dort verwendeten Nd:YAG-Lasers haben. Die eingeleitete Laserenergie schmilzt über Wärmeleitung durch das Metall oder Oxid das Glas der Glasscheiben auf, wobei sich dann die Glasströme von beiden Scheiben vermischen. Auch hier schließt sich der oben beschrieben Abkühlprozeß an.

CH 529 700 A offenbart ein Bindeglas zum Zusammenlöten von beispielsweise Glasoberflächen, wobei als Bindeglas ein kupferoxidhaltiges Harzglas aufgeschmolzen wird.

WO 93 12049 A offenbart ein Verfahren zum Verbinden zweier Gläser, bei dem schmelzbares Material an der Grenzfläche beider Glasoberflächen bereitgestellt wird und ein hochenergetischer Strahl, beispielsweise ein Laserstrahl, verwendet wird, um das schmelzbare Material mit den beiden Grenzflächen zu verbinden. Der Laserstrahl kann auch durch eines der zu verbindenden Gläser hindurchtreten. Als schmelzbares Material wird eine Glasplatte, ein Glaslot, Silikat oder Emaille in einem niedriggeschmelzten Wachs eingesetzt.

US-A-5 682 453 offenbart ein Verfahren zum Verschweißen von Glasfasern mit Hilfe eines CO₂-Lasers, ebenso wie die EP 0 678 486 A2, die beide auf dieselbe prioritätsbegründende US-Anmeldung 229,023 zurückgehen. Die Zusammensetzung des als Lot verwendeten Bindeglases weist 61% Bleioxid, <30% Siliziumoxide, <15% Aluminiumoxide, <10% Boroxide, <10% Zinkoxide und <10% Lithiumoxide auf. Es wird angegeben, daß dieses Bindeglas die Oberflächen der zu verbindenden Glasfasern benetzt und eine sehr feste Verbindung herstellt.

US-A-5 489 321 offenbart ein Verfahren zum Verschweißen zweier gegenüberliegender beabstandeter Glasflächen mit Hilfe eines dazwischenliegenden Glaselementes, welches mit Hilfe eines Lasers aufgeschmolzen wird. Das Glaselement enthält vorzugsweise FeO, VO₂, oder NiO, der Laser ist vorzugsweise ein Nd:YAG-Laser.

US-A-3 755 065 offenbart ein Glaslot zur Verbindung von Glas-, Metall- und Keramikoberflächen mit- und untereinander. Das Glaslot enthält als wesentlichen Bestandteil Silberoxid und Vanadiumpentoxid.

US-A-3 798 114 offenbart im wesentlichen silikat- und alkalifreie Gläser mit einem hohen Gehalt an Silberoxid von 20 bis 70%. Dieses Glas eignet sich zur Anbindung an Glasoberflächen und kann als elektrisch leitendes oder halbleitendes Glas verwendet werden, wenn bei einem hohen Silberoxidgehalt noch P₂O₅, As₂O₃, V₂O₅, WO₃ oder MoO₃ enthalten sind.

WO 98/39365 A offenbart eine organische Polythioether-Verbindung, die eine gute Flexibilität bei niedriger Temperatur aufweist und benzinfest ist.

Die Derwent-Zusammenfassung von JP 63129045 A (D9) offenbart die Verbindung gegenüberliegender Glasoberflächen durch einen Zement, der durch die Bestrahlung mit einem Laserstrahl die Glasoberflächen miteinander verschweißt.

Es ist die Aufgabe der Erfindung, ein Verfahren zum Verschweißen von Oberflächen von Materialien, von denen mindestens eines ein Glas ist, anzugeben, bei dem ein Abkühlprozeß nicht mehr überwacht und im Sinne einer Nachregelung kontrolliert werden muß.

Dieses Aufgabe wird durch ein Verfahren nach Anspruch 1 gelöst. Vorteilhafte Ausgestaltungen sind Gegenstand der Unteransprüche.

Das erfindungsgemäße Verfahren ist dadurch gekennzeichnet, daß zwischen die zu verschweißenden Oberflächen ein Glaslot gebracht wird und der Laserstrahl so eingerichtet wird, daß lediglich das Glaslot aufgeschmolzen wird.

Glaslot meint dabei ein leicht schmelzendes Glas mit niedriger Viskosität und kleiner Oberflächenspannung bei Verschmelzungstemperaturen zwischen 300 - 450°C. Ein Glas mit Schmelzpunkt 450°C hat zum Beispiel folgende Zusammensetzung:
70 - 92 % PbO
2 - 15 % (ZnO, SrO)
0,6 - 15 % B₂O₃
0 - 15 % (SiO₂, Al₂O₃, TiO₂)

Nach einer besonderen Ausgestaltung des Verfahrens wird ein silberhaltiges Glaslot venvendet.

Weiter bevorzugt wird das Glaslot auf zumindest eine der zu schweißenden Oberflächen aufgedruckt. Es kann anschließend vorgesehen sein, die Lotschicht aufzusintem, damit eine bessere Haftung an der Oberfläche erreicht wird.

Es ist zweckmäßig, dem Glaslot Zusätze beizumischen, damit die Absorption für die Wellenlänge des Laserlichts maximal wird.

Das Material der zweiten Oberfläche kann Glas oder Metall sein.

Bei der erfindungsgemäßen Verschweißung von Gläsern wird Glaslot, das in der Regel als Paste vorliegt, zwischen die zu verbindenen Oberflächen gebracht und mit einem Laser dann so erhitzt, das im Glaslot ein Glasfluß entsteht. Durch die im Glaslot enthaltenen Zusatzstoffe wird erreicht, daß das Glaslot im Laserstrahl aufgeschmolzen wird und das Glaslot seinerseits dann sich mit den Grenzflächen so reagiert, daß nach dessen Erstarren ist eine dauerhafte Verbindung zwischen den zu verbindenen Oberflächen entsteht. Eine zu überwachende Abkühlphase entfällt. Nach der Laserverschweißung können die verschweißten Glaser sofort benutzt werden.

Für die Anwendung des erfindungsgemäßen Verfahrens ist es nicht erforderlich, daß der Laserstrahl direkt auf das Glaslot tritt. Vielmehr kann er durch das mindestens eine der zu verbindenen Glaser hindurchgeführt werden.

Laserenergie, Wellenlänge, Dauer der Einwirkung des Lasers, die Absorptionseigenschaften des Glaslotes sowie die Transmission des Glases, das verschweißt werden soll, werden so aufeinander abgestimmt, daß eine optimale Verschweißung möglich wird.

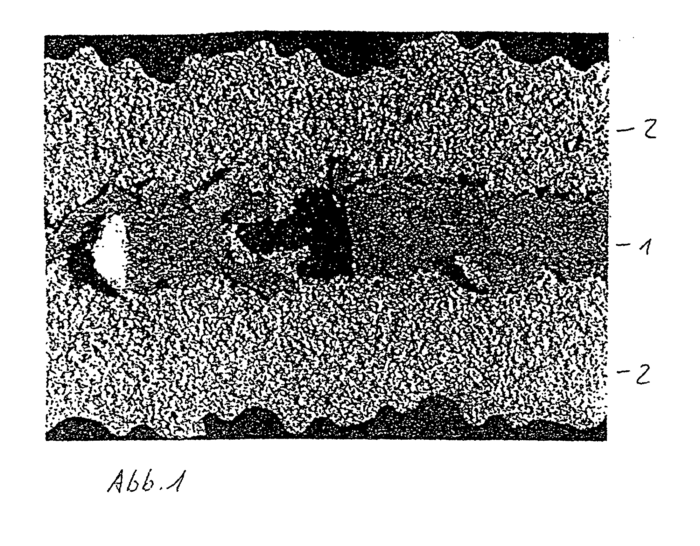

Zur Veranschaulichung ist mit Abbildung 1 eine photomikrographische Aufnahme beigefügt. Sie zeigt jeweils die Oberfläche einer aufgebrochenen Verschweißung.

Die Breite der mikrographischen Aufnahme entspricht ungefähr 0,5 mm. Die Spur 1 des Laserstrahls zieht sich durch das Silber-Glaslot 2. Beim Aufbrechen der Schweißverbindung wurde das verschweißte Material aus der Spur 1 sozusagen aus dem Untergrund herausgezogen, zu erkennen an der Stufe von Spur 1 zu Silberlot 2 in Abbildung 1, so daß davon ausgegangen werden kann, daß zu der entsprechenden Oberfläche eine innige Verbindung bestanden hat, die nur durch hohen Kraftaufwand wieder zerstört werden kann.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. Verfahren zum Verschweißen von Oberflächen von Materialien, von denen mindestens eines ein Glas ist, Bei dem die zum Verschweißen erforderliche Energie über einen Laserstrahl eingebracht wird,
**dadurch gekennzeichnet, daß** zwischen die zu verschweißenden Oberflächen ein Glaslot gebracht wird und der Laserstrahl so eingerichtet wird, daß lediglich das Glaslot aufgeschmolzen wird, wobei das Glaslot aus
70 - 92 % PbO,
2 -15 % ZnO, SrO,
0,6 -15 % B₂O₃,
0 - 15 % SiO₂, Al₂O₃, TiO₂, besteht.

2. Verfahren nach Anspruch 1, **dadurch gekennzeichnet, daß** das Glaslot silberhaltig ist.

3. Verfahren nach Anspruch 1 oder 2, **dadurch gekennzeichnet, daß** das Glaslot auf zumindest eine der zu verschweißenden Oberflächen aufgedruckt wird.

4. Verfahren nach Anspruch 1 bis 3, **dadurch gekennzeichnet, daß** das Material der zweiten Oberfläche Glas oder Metall ist.

5. Glaslot zur Verwendung beim Verschweißen einer Glasoberfläche, das mittels eines Lasers aufgeschmolzen werden kann,
**dadurch gekennzeichnet, daß** das Glaslot aus
70 - 92 % PbO,
2 - 15 % ZnO, SrO,
0,6 - 15% B₂O₃,
0 - 15 % SiO₂, Al₂O₃, TiO₂, besteht.

6. Glaslot nach Anspruch 5, **dadurch gekennzeichnet, daß** es silberhaltig ist.

## Claims

1. A method of welding surfaces of materials, at least one of which is a glass. The energy required in the method is provided by a laser beam, **characterised in that** a glass solder is placed between the surfaces for welding and the laser beam is directed so that only the glass solder is melted, wherein the glass solder consists of
70 - 92% PbO,
2 - 15% ZnO, SrO,
0 . 6 - 15% B₂O₃, and
0 - 15% SiO₂, Al₂O₃, TiO₂.

2. A method according to claim 1, **characterised in that** the glass solder contains silver.

3. A method according to claim 1 or 2, **characterised in that** the glass solder is pressed on to at least one of the surfaces for welding.

4. A method according to claims 1 to 3, **characterised in that** the second surface is made of glass or metal.

5. A glass solder for use in welding a glass surface and adapted to be melted by a laser, **characterised in that** the glass solder consists of
70 - 92% PbO,
2 - 15% ZnO, SrO,
0.6 - 15% B₂O₃, and
0 - 15% SiO₂, Al₂O₃, TiO₂.

6. A glass solder according to claim 5, **characterised in that** it contains silver.

## Revendications

1. Procédé pour le soudage de surfaces de matériaux, l'une au moins des surfaces étant du verre, dans lequel l'énergie nécessaire pour le soudage est apportée par un rayon laser,
**caractérisé en ce qu'**un matériau d'apport en verre est placé entre les surfaces à souder et **en ce que** le laser est réglé de telle sorte que seul le matériau d'apport en verre est fondu, ledit matériau d'apport en verre étant constitué par
| | |
|---|---|
| PbO | 70-92% |
| ZnO, SrO | 2-15% |
| B₂O₃ | 0,6-15% |
| SiO₂, Al₂O₃, TiO₂ | 0-15% |

2. Procédé selon la revendication 1, **caractérisé en ce que** le matériau d'apport en verre contient de l'argent.

3. Procédé selon l'une des revendications 1 ou 2, **caractérisé en ce que** le matériau d'apport en verre est pressé sur au moins l'une des surfaces à souder.

4. Procédé selon l'une des revendications 1 à 3, **caractérisé en ce que** le matériau de la deuxième surface est du verre ou du métal.

5. Matériau d'apport en verre destiné à être utilisé pour le soudage de surfaces en verre, qui peut être fondu par un laser, **caractérisé en ce qu'**il est constitué par
| | |
|---|---|
| PbO | 70-92% |
| ZnO, SrO | 2-15% |
| B₂O₃ | 0,6-15% |
| SiO₂, Al₂O₃, TiO₂ | 0-15% |

6. Matériau d'apport selon la revendication 5, **caractérisé en ce qu'**il contient de l'argent.
